Europäisches Patentamt

European Patent Office

Office européen des brevets

(19)

(11) Veröffentlichungsnummer: **0 114 361**
**A2**

(12) **EUROPÄISCHE PATENTANMELDUNG**

(21) Anmeldenummer: **83112903.6**

(22) Anmeldetag: **21.12.83**

(51) Int. Cl.³: **B 29 C 17/07**
**B 29 D 23/00**

(30) Priorität: **23.12.82 DE 3247617**

(43) Veröffentlichungstag der Anmeldung:
**01.08.84 Patentblatt 84/31**

(84) Benannte Vertragsstaaten:
**AT BE CH DE FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Disselbeck, Dieter**
**Am Rehsteig 3**
**D-6232 Bad Soden am Taunus(DE)**

(72) Erfinder: **Stahl, Dieter**
**Am Mühlbach 24**
**D-6239 Kriftel(DE)**

(54) **Verfahren zum Herstellen von Kunststoffrohren.**

(57) Faserverstärkte Kunststoffrohre werden aus schlauchförmigen Geweben, Gewirken, Gestricken oder Vliesen hergestellt, indem diese mit einem aushärtbaren Kunstharz imprägniert werden, welches in einer ersten Stufe bis zur Klebfreiheit getrocknet wird. Danach wird dieses Gebilde aufgeblasen, und in einer zweiten Stufe wird das Kunstharz ausgehärtet. Es können Rohre verschiedenster vorgegebener Formen, auch mit Verzweigungen, auf diese Weise hergestellt werden.

EP 0 114 361 A2

Verfahren zum Herstellen von Kunststoffrohren

Die Erfindung betrifft ein Verfahren zum Herstellen von faserverstärkten Kunststoffrohren.

Aus der DE-OS 1629639 ist ein Verfahren zum Herstellen von Rohren bekannt, nach welchem ein Schlauch von geringer Festigkeit, im allgemeinen ein Folienschlauch, an einem festliegenden Punkt geschlossen gehalten und dann mit einem nicht zusammenhängenden Füllmittel, in aller Regel Luft, gefüllt bzw. aufgeblasen wird. Auf diesen Folienschlauch geringer Festigkeit wird danach eine Schicht aus einer oder mehreren Gewebebahnen aufgebracht, die mit einem wärmehärtbaren Kunstharz imprägniert sind, wobei deren Längskanten stumpf aneinanderstoßend um den Folienschlauch herumgelegt werden.

Nach diesem Verfahren werden zwar schon Rohre erhalten, die Gewebe und ausgehärtete Kunstharze enthalten, jedoch ist stets notwendigerweise ein Folienschlauch enthalten; außerdem ist das Verfahren zu ihrer Herstellung recht aufwendig, insbesondere durch das Umwinden des Folienschlauches mit einer oder mehreren Gewebebahnen.

Bekannt ist ferner ein Verfahren zum Herstellen von Hohlprofilstrukturen, nach welchen ein Netz von längs aneinandergewebten flachen Schläuchen zunächst zu Hohlprofilen aufgetrieben und dann mit einer härtenden Beschichtung oder Imprägnierung versehen wird. An das Herstellen von einzelnen Kunststoffrohren ist dabei nicht gedacht worden, sondern lediglich an ein Hartrohrnetz, das als Isolationsmaterial verwendet wird (DE-OS 2 529 185).

Die Erfindung hat sich nun die Aufgabe gestellt, ein einfaches Verfahren zum Herstellen von einzelnen faserverstärkten Kunststoffrohren zur Verfügung zu stellen, das ohne das übliche Wickeln und Schleudern auskommt. Ferner soll es ohne aufwendige Trocknungsschritte auskommen, die häufig zum Entfernen des im Kunstharz enthaltenen Wassers benötigt werden.

Dieses Ziel wurde dadurch erreicht, daß ein Schlauch aus einem textilen Gebilde mit einem aushärtbaren Kunstharz imprägniert wird, welches danach in einer ersten Stufe bis zur Klebfreiheit getrocknet wird, daß dann das textile Gebilde aufgeblasen wird, und daß dann das Kunstharz im aufgeblasenen Zustand des textilen Gebildes in einer zweiten Stufe ausgehärtet wird. Vorzugsweise wird ein Kunstharz vom Resoltyp zum Imprägnieren verwendet. Das Aufblasen des Gewebeschlauches wird wesentlich erleichtert, wenn in sein Inneres ein Folienschlauch eingezogen wird.

Die nach diesen Verfahren erhaltenen faserverstärkten Kunststoffrohre enthalten als Verstärkungsmaterial einen einzelnen Schlauch aus einem textilen Gebilde.

Das erfindungsgemäße Verfahren bietet den Vorteil, daß das textile Verstärkungsmaterial nicht während des Herstellungsverfahrens erst aus Einzelbahnen geformt und auf einen Kern gewickelt werden muß, sondern daß es schon die endgültige Form, nämlich runden Querschnitt aufweist, sowie es aufgeblasen wird. Somit sind die aufwendigen Wickelvorrichtungen überflüssig, die besonders beim Verarbeiten von schon mit Kunstharz bestrichenen Gewebestreifen stets Anlaß zu vielfältigen Betriebsstörungen sind. Ferner entfällt die Notwendigkeit, die in eine Außenform eingebrachten textilen Verstärkungen durch Schleudern mit der erforderlichen Menge an Kunstharz zu versehen und in dieser Außenform dann auszuhärten und das fertige Rohr sodann aus der Außenform zu entnehmen. Es genügt vielmehr, lediglich den Gasdruck abzulassen und das fertige verstärkte Kunststoffrohr zu entfernen. Nach dem erfindungsgemäßen Verfahren können auch ohne weiteres verzweigte Rohre hergestellt werden, indem nämlich zunächst die gewünschten Verzweigungen durch entsprechendes Zusammennähen von Schlauchstücken hergestellt werden. Das so gebildete Schlauchstück wird dann mit Kunstharz versehen, aufgeblasen, und das Kunstharz ausgehärtet. Keines der bekannten Verfahren bietet diese einfache Möglichkeit.

Außerdem ermöglicht es die einfache Herstellung von einzelnen faserverstärkten Kunststoffrohren beliebiger Form, nicht nur die Herstellung von Rohrbündeln.

Fasermaterialien, die für das erfindungsgemäße Verfahren geeignet sind, sind die üblichen für die Verstärkung von Kunststoffen verwendeten, wie Fäden und Fasern aus Polyamiden, Aramiden, Polyestern, Polyolefinen, Polyvinylchlorid, Polyacrylnitril, oder auch Naturfasern, wie Wolle und Baumwolle; ferner Glas-, Mineral-, Metall- und Kohlefasern.

Sie können in Form von vorzugsweise Geweben eingesetzt werden, aber auch als Gestricke oder Gewirke, oder auch als zu Schläuchen verformte Vliese.

Als zu verstärkende Kunststoffe kommen vorzugsweise Materialien in Frage, die kein Wasser als Lösungs- oder Dispergiermittel enthalten, sondern allenfalls bei der Kondensation Wasser abspalten, wie z. B. Phenol-Formaldehydharze vom Resol-Typ, die jedoch für sich selbst bestens bekannt sind. Jedoch können auch Kunststoffe aus wässeriger Phase erfindungsgemäß verarbeitet werden, nur ist das Entfernen des Wassers vor und während des Aushärtens in solchen Fällen wesentlich umständlicher, und der Schlauch muß in solchen Fällen lange aufgeblasen gehalten werden.

Der einzusetzende Schlauch aus diesen Fäden oder Fasern wird vorteilhaft unmittelbar hergestellt durch Weben, Wirken oder Stricken beispielsweise; er kann aber auch aus solchen textilen Flächengebilden durch Verformen zum Schlauch und Verbinden der aufeinanderliegenden Kanten, z. B. durch Nähen, Nadeln oder Kleben, hergestellt werden; insbesondere dann, wenn Vliese als Schlauchmaterial eingesetzt werden sollen. Wichtig ist nur, daß das textile Gebilde vor dem Aufblasen schlauchförmig ist. Vorzugsweise werden als Ausgangsmaterial im Schlauch gewebte Elemente entsprechenden Durchmessers eingesetzt. Das schlauchförmige Gewebe kann aber auch aus einem doppelliegenden Gewebe, dessen Seitenkanten vernäht, verschweißt oder durch andere Fügemethoden zu einem Schlauch miteinander verbunden werden, als Ausgangsmaterial hergestellt werden. Nach dem Aushärten können die dann vorhandenen, an der Nahtstelle überstehenden Gewebekanten besäumt werden oder aber sie können als Leiste zur Befestigung des Rohres dienen.

Der Schlauch wird mit dem Kunstharz imprägniert, sei es durch Tauchen oder durch Sprühen, und bei einer Temperatur von 90 bis 110°C wird das Wasser entzogen, bzw. abgespalten. Sodann wird der mit dem vorkondensierten Harz versehene, klebfreie und noch flexible Schlauch mit Gas gefüllt und aufgeblasen, wobei er die gewünschte Raumform annimmt.

Als Gas zum Aufblasen dient vorzugsweise Luft, es kommen aber auch Stickstoff, Kohlendioxid oder auch überhitzter Wasserdampf infrage.

Das Aushärten des Kunststoffes erfolgt dann entweder durch die Zuführung eines Gases mit hoher Temperatur, vorzugsweise von 200 bis 250°C, oder durch von außen auf den aufgeblasenen Schlauch auftreffende Wärmestrahlung.

Außerdem kann dem Füllgas ein Katalysator zum Beschleunigen des Aushärtens zugesetzt werden, beispielsweise Chlorwasserstoff-Gas.

Nach dem Aushärten erhält man so ein eigenformstabiles Rohr, das sich durch ein geringes Gewicht bei hoher Festigkeit insbesondere bei Verwendung von Glas-, Mineral- oder Kohlefasern auszeichnet. Rohre dieses Typs aus Glasfasern mit Kondensationsharz zeigen ein günstiges Brandverhalten mit geringer Rauchgasdichte.

Bei der Verwendung von porösen leichten Geweben zur Herstellung dünnwandiger Rohre wird in den mit vorkondensiertem Harz versehenen Gewebeschlauch ein Folienschlauch eingebracht, der zur Aufrechterhaltung des formgebenden Innendrucks dient. Der Folienschlauch kann nach dem Aushärten des imprägnierten Gewebeschlauchs entfernt werden oder aber zur Erhöhung der Dichtigkeit und zur Verbesserung der strömungstechnischen Eigenschaften im Rohr verbleiben. Das Material der Folie muß dabei eine der Aushärtungstemperatur entsprechende Wärmebeständigkeit aufweisen. Es eignen sich dazu Folienmaterialien aus z. B. Polyester, Polycarbonat oder Polytetrafluorethylen.

<u>Beispiel</u>

Ein Gewebeschlauch, Durchmesser 10 cm, Länge 270 cm wird mit einem Phenol-Formaldehydharz mit nachstehenden Charakteristika getränkt, 20 Min. bei 90°C frei hängend klebfrei getrocknet, und mit Heißluft von 210°C bei einem Überdruck von 1/2 atü aufgeblasen, wobei nach ca. 5 Minuten durch Aushärtung des Harzes das Rohr sich ausgebildet hat.

Harzzusammensetzung:

alkalisch kondensiertes niedermolekulares Phenol-Formaldehyd-Resol.
Molverhältnis Phenol: Formaldehyd = 1 : 1,8
Festkörpergehalt: 75 % (bezogen auf Rückstandsbestimmung 1 h bei 135°C, Einwaage 2 g, Rückstandsdeckel 7 cm Durchmesser)
Viskosität = 200 m Pas bei 20°C
Wasserlöslichkeit= bis 200 %

Patentansprüche:

1. Verfahren zum Herstellen von faserverstärkten Kunststoffrohren aus schlauchförmigen Geweben, Gestricken, Gewirken oder Vliesen dadurch gekennzeichnet, daß ein Schlauch aus einem textilen Gebilde mit einem aushärtbaren Kunstharz imprägniert wird, daß dann in einer ersten Stufe bis zur Klebfreiheit getrocknet wird, dann mit einem Gas aufgeblasen wird, und daß im aufgeblasenen Zustand in einer 2. Stufe ausgehärtet wird.

2. Verfahren nach Anspruch 1, dadurch gekennzeichnet, dadurch gekennzeichnet, daß ein aushärtbares Kondensationsharz vom Resoltyp eingesetzt wird.

3. Verfahren nach einem der Ansprüche 1 bis 2, dadurch gekennzeichnet, daß im Inneren des Schlauches aus einem textilen Gebilde ein Folienschlauch angeordnet ist.

4. Faserverstärktes Kunststoffrohr, dadurch gekennzeichnet, daß das verstärkende Fasermaterial ein einzelner Schlauch aus einem textilen Gebilde ist.